Europäisches Patentamt

European Patent Office

Office européen des brevets

(11) Publication number: **0 153 035**
**B1**

(12) EUROPEAN PATENT SPECIFICATION

(45) Date of publication of patent specification: 29.03.89

(21) Application number: **85300545.2**

(22) Date of filing: **25.01.85**

(51) .Int. Cl.⁴: **G 01 F 15/00,** G 01 F 15/06, B 67 D 5/08

(54) **Flow control apparatus for liquid delivery system.**

(30) Priority: **27.01.84 JP 13933/84**

(43) Date of publication of application:
**28.08.85 Bulletin 85/35**

(45) Publication of the grant of the patent:
**29.03.89 Bulletin 89/13**

(84) Designated Contracting States:
**DE GB IT**

(56) References cited:
**GB-A-2 028 768**
**US-A-3 913 787**
**US-A-4 290 538**

(73) Proprietor: **SHARP KABUSHIKI KAISHA**
**22-22 Nagaike-cho Abeno-ku**
**Osaka 545 (JP)**

(72) Inventor: **Fujiwara, Shigemasa**
**875-11, 7-chome Ayameike-Minami**
**Nara-shi Nara-ken (JP)**
Inventor: **Uemura, Shoji**
**3 Aza Kamikoma Gakko Mae**
**Yamashiro-cho Soraku-gun Kyoto-fu (JP)**
Inventor: **Sugishima, Yasuo**
**33 Minami-Satouchi Inuidani**
**Seika-cgho Soraku-gun Kyoto-fu (JP)**

(74) Representative: **Wright, Peter David John et al**
**R.G.C. Jenkins & Co. 26 Caxton Street**
**London SW1H 0RJ (GB)**

Courier Press, Leamington Spa, England.

# Description

The present invention relates to an improved flow control apparatus for a liquid delivery system, for example for the POS system (or refuel control system) of a gasoline service station.

Conventionally, there are two methods of the flow rate control being applied to the refuel control system including; (1) method of directly controlling the motor of the refuel unit, and (2) method of controlling the flow rate. Of these, the latter method can improve accuracy of the refuelling operation. Conversely, this method involves complex configuration of the refuelling units, thus increasing cost.

To solve these problems, it has already been proposed in the prior art to adapt the former method so as to simplify the overall construction and also save cost. Typically, one of the prior art techniques based on the former method had proposed such a system described below. For example, when installing a new refuelling unit, a specific volume (about 7 litres) of gasoline is discharged to preliminarily determine the difference between actual and measured flow rate so as to determine the value of the flow rate difference (a) caused by the inertia of the pump motor so that this data can be preset in memory of the control unit. In the actual refuelling operation, the system causes the pump motor to stop upon arrival at the value produced by the subtraction of the difference value (a) from the designated refuel volume Q, thus properly controlling the refuel operation. Nevertheless, even after introducing such a new control method, since the refuelling units themselves were subjected to the degradation of performance characteristics and varying environmental conditions, even when applying the pre-determined difference value (a) to the refuelling operation, actually, a significant difference still occurred. When refuelling still less volume of gasoline, for example, less than 7 liters, the difference actually tends to increase furthermore. In the light of such a difficult problem to solve, the applicant related to the present invention had already proposed a special refuel control system in the Japanese Patent Laid-Open No. 204895 of 1982, which aimed at a high-precision refuel control by minimizing the difference of the control value. The refuel control system previously proposed by the applicant related to the present invention was designed to securely minimize the difference value (a) in its practical applications by considering possible degradation of the mechanical characteristics and variable environmental conditions. More particularly, by presetting the mean value of the difference (a) detected during the previously done refuelling operations covering the last several rounds, the refuel control system automatically corrects the difference value (a) so that the actual difference value can be obtained in response to those varying conditions. However, it was eventually found that even when applying such control system proposed by the applicant, it was very hard to precisely correct the difference generated during the initial stage of the refuelling operation. In other words, when the pump motor had turned on at the start of a refuel operation, a number of unnecessary flow-rate measuring pulses were generated by the flow-rate pulse generator while no gasoline was actually fed through the nozzle, due to variation in the pressure inside the refuel pipe, and as a result, an unexpected difference value suddenly appeared during the refuelling operation.

US—A—4290538 discloses a flow-rate measurement control device and flow control apparatus for a refuel control system in which flow is measured during liquid delivery by the use of pulses generated by a pulse generator. The system comprises a refuel unit and a counter for counting the flow rate pulses generated by the pulse counter.

The present invention aims at providing a new flow control apparatus for a liquid delivery system such as a refuel control system, which can alleviate the problems noted earlier.

To achieve this, the invention provides flow control apparatus for a liquid delivering system, in which flow is measured during liquid delivery by use of pulses generated by a pulse generator characterised in that following the initiation of a liquid delivery operation the said pulses are ignored in the flow measurement for a preset period.

More particularly, counting of the pulses is inhibited for said preset period following turn-ON of a pump motor of the delivery system.

In the preferred embodiment, the pulses comprise a nozzle signal and a data processing means which carries out the flow measurement comprises a control processor and an operation processor, the preset period being stored in a memory of the control processor. The operation processor first causes the non-measurement preset perid to be read from the memory in the control processor, and then inhibits the pulse counting as described. In addition, the preset period can be altered using input means of the control processor.

An embodiment of the invention will now be described by way of example with reference to the accompanying drawings, in which:—

Fig. 1 is a simplified block diagram of a refuel control system in accordance with the present invention;

Fig. 2 is a more detailed schematic diagram of the refuel control system shown in Fig. 1; and

Fig. 3 is a flowchart describing stepwise operations of the flow-rate measurement control system of figures 1 and 2.

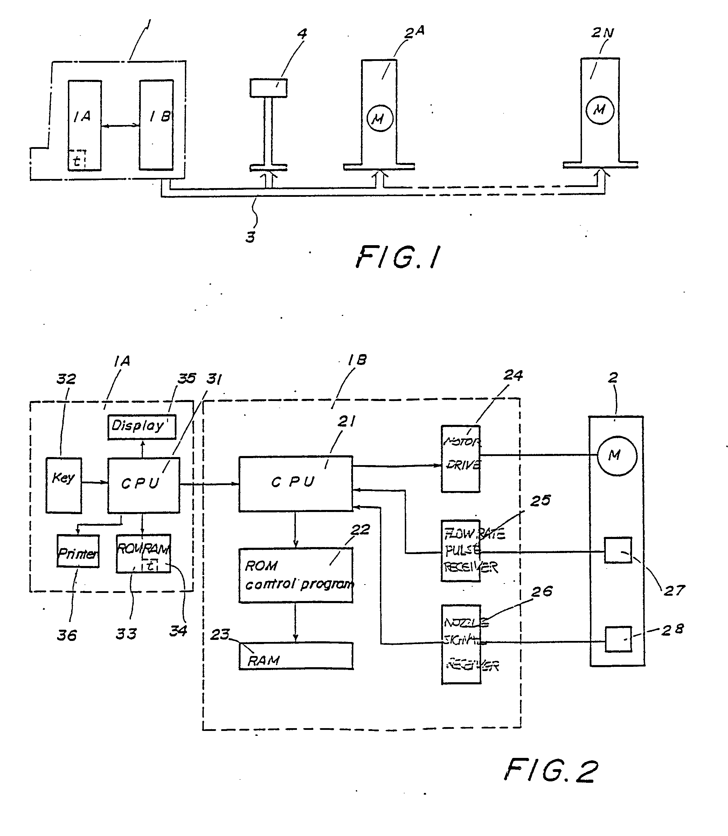

Fig. 1 is a simplified block diagram of the refuel control system reflecting the preferred embodiment of the present invention. In Fig. 1, reference number 1 indicates the refuel control unit (POS) incorporating the controller (control processor) 1A for processing data and the other controller (operation processor) 1B controlling the entire operations of the refuel units. Reflecting the preferred embodiments, the controller 1A is internally provided with a memory area storing the data related to the non-measurement time against unnecessary flow-rate pulses. Reference numbers 2A through 2N respectively indicate the refuel units, each being connected to the controller 1 via the signal cables 3, while the operations of these refuel units are controlled by the controller 1B. Each of these refuel units incorporates a pump motor M so that the designated volume of gasoline can be supplied to consumers by driving this motor. Reference number 4 indicates the externally provided I/O units connected to the refuel controller (POS) 1. Fig. 2 is the detailed schematic diagram showing the relationship between the data-processing controller 1A (host unit), the refuel controller 1B (subordinate unit), and respective refuel units. In Fig. 2, the controller 1B incorporates the sub-CPU 21, ROM 22 storing the control programs, RAM 23 storing various data, the motor driver 24, the flow-rate pulse receiver 25, and the nozzle signal receiver 26, are respectively connected to the refuel units 2. The motor driver 24 drives the motor M of the refuel unit 2 in response to the command from the sub-CPU 21. The flow-rate pulse receiver 25 receives the pulse signals corresponding to the refueled volume generated by the flow-rate pulse generator 27, and then delivers these data to the sub-CPU 21. Likewise, the nozzle signal receiver 26 receives such signals generated in response to the manual opening and closing of the valve of the refuel nozzle 28 of the refuel unit done by the operator, and then delivers these data to the sub-CPU 21. The controller 1A is provided with the keyboard unit 32 that inputs a variety of trade data, the host CPU 31 that processes a variety of data received from the keyboard 32 in accordance with programs stored in ROM 33, RAM 34 that stores a variety of data processed by the host CPU 31, and a printer that prints and records a variety of the processed data. RAM 34 is provided with a memory area "t" that stores the non-measurement time data in conjunction with unnecessary flow-rate pulses.

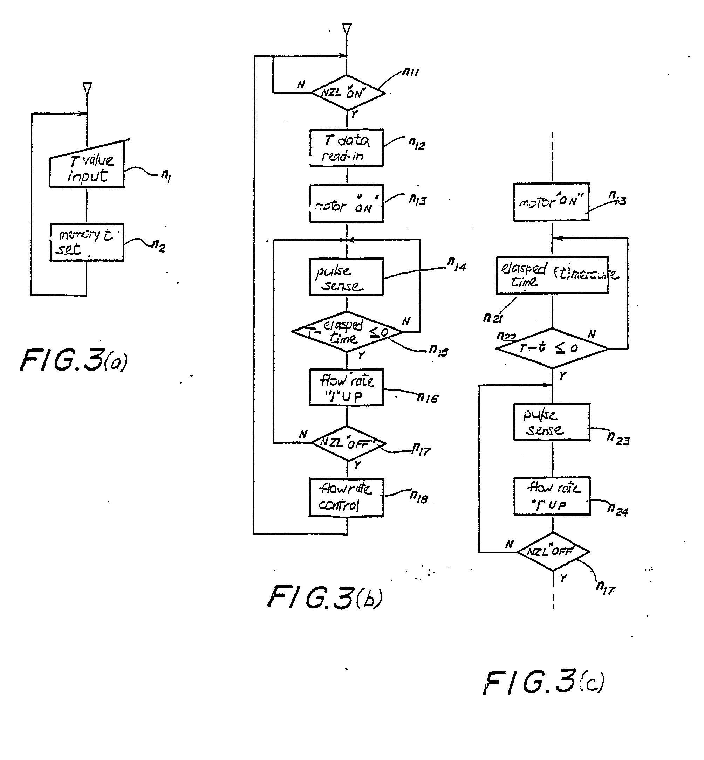

Next, referring now to Fig. 3 (a) and (b), the refuel control operations according to the preferred embodiment of the present invention are described below. Fig. 3 (a) and (b) are respectively the flowcharts concretely describing the operations of the refuel control system embodied by the present invention. First, referring to the flowchart of Fig. 3 (a), method related to the entry of the non-measurement time data is described below.

(1) Method of presetting the non-measurement time data (a)

First, by operating the keyboard 32 of the controller 1A, the controller operator inputs a non-measurement time data T (denoting such a period until gasoline actually reaches the nozzle 28 after activating the pump motor M, 0.8 second for example) into memory area "t" of RAM 34 via the host CPU 31 (steps n1 and n2). It is ideal to preset the non-measurement time data T at 100 meters per second of the flow rate, within a range from 0.5 through a maximum of 1.0 second. When entering the non-measurement time data T, a variety of conventional data including the unit prices of petroleum products can also be input into a specific area of RAM 34. Next, referring to the flowchart of Fig. 3 (b), method of measuring the actual flow rate of gasoline is described below.

(2) Method of measuring flow rate (b)

When the refuel operator activates the nozzle 28 of the refuel unit, the signal activated by the nozzle 28 is transmitted to the sub-CPU 21 through the nozzle signal receiver 26, thus allowing the sub-CPU 21 to identify the nozzle-activated signal (step n11). The sub-CPU 21 then advises the host CPU 31 that the nozzle 28 has been activated. On receipt of this advising signal, the host CPU 31 reads the non-measurement time data T from memory area "t" of RAM 34, and simultaneously, the host CPU 31 also reads various data needed for this transaction from a specific area of RAM 34 for delivery to the sub-CPU 21. After receiving the non-measurement time data T and other needed data (step n12), the sub-CPU 21 then activates the pump motor M via the motor driver 24 (step n13) to allow the refuel operation to start up. Simultaneously, the sub-CPU 21 counts the elapsing time after the activation of the pump motor M. The sub-CPU 21 receives the flow-rate pulses from the refuel unit 2 through the flow-rate pulse receiver 25 and identifies it (step n14). The sub-CPU 21 doesn't immediately count the incoming flow-rate pulses, but it starts to count these pulses as the measurable data only after the time elapsed from the activation of the pump motor M has just reached the non-measurment time T (steps n15 and n16). After completing the designated refuel operation by repeating the above procesdures, the nozzle 28 is closed. When this state is identified by the sub-CPU 21 (step n17), the sub-CPU 21 then delivers the measurement data to the host CPU 31, and as a result, the host CPU 31 starts to execute all the needed operations to complete this transaction (step n18).

These serial operations are performed in each refuel operation. The refuel control system incorporating the preferred embodiment of the present invention inhibits the flow-rate pulse counting operation only for a specific period of time T immediately after the activation of the pump motor M.

Alternatively, as shown in Fig. 3 (c), another preferred embodiment inhibits the flow-rate pulse counting operation either by inhibiting the sub-CPU 21 to detect the incoming flow-rate pulses until the elaspsed time "t" reaches the non-measurement time T after activation of the pump motor M or by inhibiting the input of the flow-rate pulses into the sub-CPU 21, thus substantially disabling the flow-rate pulse counting until the time elapsed from the activation of the pump motor M exactly reaches the non-measurement time T (steps n21 through n24). As a result, the non-measurement time data T stored in the host CPU in reference to the nozzle signal from the refuel unit is read by the sub-CPU 21, thus it is possible to securely inhibit the counting of the flow-rate pulses sent from the refuel unit in conjunction with the non-measurement time data T, and as a result, undesired counting of the unnecessary pulses at the time of activating the pump motor M can be effectively prevented.

As is clear from the above detailed description, since the preferred embodiments of the present invention effectively inhibit the counting operation of the flow-rate pulses for a specific period of time at the initial stage of the refuel operation, unwanted counting of unnecessary flow-rate pulses during the refuel operation can be securely prevented, thus realizing a highly accurate measurement of the refueled volume throughout routine services.

**Claims**

1. Flow control apparatus for a liquid delivering system, in which flow is measured during liquid delivery by use of pulses generated by a pulse generator (27) characterised in that following the initiation of a liquid delivery operation the said pulses are ignored in the flow measurement for a preset period.

2. Flow control apparatus according to claim 1 which has means for altering the said preset period.

3. Flow control apparatus according to claim 1 or claim 2 in which the said measurement of flow is carried out by data processing means (1), the said preset period being stored in a memory of the data processing means (1).

4. Flow control apparatus according to claim 3 in which the said data processing means (1) comprises a control processor (1A) and an operation processor (1B), the said preset period being stored in a memory (34) of the control processor (1A), the operation processor (1B) obtaining the value of the preset period from the control processor (1A) on initiation of a liquid delivery operation and receiving the said pulses during the liquid delivery operation, the operation processor (1B) counting said pulses received by it after the expiry of the preset period.

5. Flow control apparatus according to any preceding claim wherein the liquid delivery system is a refuel control system, and wherein the pulse generator (27) generates said pulses in accordance with the fuel flow-rate during refuelling.

**Patentansprüche**

1. Vorrichtung zum Steuern der Durchflußmenge bei einem Flüssigkeitsabgabesystem, bei der der Durchfluß während der Flüssigkeitsabgabe durch Auswertung der von einem Pulsgenerator (27) erzeugten Pulse gemessen wird, dadurch gekennzeichnet, daß die während einer bestimmten Zeitperiode im Anschluß an dem Beginn der Flüssigkeitsabgabe erzeugten Pulse bei der Flüssigkeitsmengenmessung unberücksichtigt bleiben.

2. Vorrichtung nach Anspruch 1, gekennzeichnet durch eine Einrichtung zur Veränderung der festgesetzten Zeitperiode.

3. Vorrichtung nach einem der Ansprüche 1 oder 2 dadurch gekennzeichnet, daß die Durchflußmessung durch eine Datenverarbeitungseinheit (1) ausgeführt wird, und die festgesetzte Zeitperiode in einem Speicher der Datenverarbeitungseinrichtung (1) gespeichert ist.

4. Vorrichtung nach Anspruch 3, dadurch gekennzeichnet, daß die Datenverarbeitungseinrichtung (1) einen Steuerprozessor (1A) und einen Betriebsprozessor (1B) aufweist, daß die festgesetzte Periode in einem Speicher (34) des Steuerprozessors (1A) gespeichert ist, daß der Betriebsprozessor (1B) die Länge der vom Steuerprozessor (1A) gesetzten Zeitperiode bei Beginn der Flüssigkeitsabgabe erhält und die während der Flüssigkeitsabgabe erzeuten Pulse empfängt, und daß der Betriebsprozessor (1B) die nach Verstreichen der festgesetzten Zeitperiode empfangenen Pulse zählt.

5. Vorrichtung nach einem der vorhergehenden Ansprüche, dadurch gekennzeichnet, daß das Flüssigkeitsabgabesystem ein Betankungsüberwachungssystem ist, und daß der Pulsgenerator (27) die Pulse entsprechend der Brennstoff-Durchflußrate während der Betankung erzeugt.

**Revendications**

1. Dispositif de régulation de débit pour un système de distribution d'unb liquide, dans lequel le débit est mesuré pendant la distribution du liquide à l'aide d'impulsions produites par un générateur d'impulsions (27), caractérisé en ce qu'à la suite du déclenchement d'une opération de distribution du liquide, lesdites impulsions sont ignorées lors de la mesure du débit, pendant une période préréglée.

2. Dispositif de régulation de débit selon la revendication 1, qui comporte des moyens pour modifier ladite période préréglée.

3. Dispositif de régulation de débit selon la revendication 1 ou 2, dans lequel ladite mesure de débit est exécutée par des moyens (1) de traitement de données, ladite période préréglée étant mémorisée dans une mémoire des moyens (1) de traitement de données.

4. Dispositif de régulation de débit selon la revendication 3, dans lequel lesdits moyens (1) de traitement de données comprennent un processeur de commande (1A) et un processeur de traitement (1B), ladite période préréglée étant mémorisée dans une mémoire (34) du processeur de commande (1A), le processeur de traitement (1B) obtenant la valeur de la période préréglée à partir du processeur de commande (1A) lors du déclenchement d'une opération de distribution d'un liquide et recevant lesdits impulsions lors de l'opération de distribution du liquide, le processeur de traitement (1B) comptant lesdits impulsions, qu'il reçoit, après la fin de la période préréglée.

5. Dispositif de régulation de débit selon l'une quelconque des revendications précédentes, dans lequel le système de distribution du liquide est un système de commande de distribution de carburant, et dans lequel le générateur d'impulsions (27) produit lesdites impulsions en fonction du débit du carburant pendant sa distribution.

FIG. 1

FIG.2

FIG.3(a)

FIG.3(b)

FIG.3(c)

2